# EUROPEAN PATENT SPECIFICATION

(11) **EP 2 438 987 B1**
(45) Date of publication and mention of the grant of the patent: **16.07.2014**
(21) Application number: 11179711.4
(22) Date of filing: 01.09.2011
(51) Int. Cl.: B01J 29/04, B01J 35/04, B28B 11/24, C04B 35/80, C04B 38/00, C04B 40/02, F26B 3/347, H05B 6/64

(54) **Manufacturing methods of a ceramic fired body, a honeycomb structure, and an exhaust gas converting device, and a drying apparatus**
Herstellungsverfahren für einen gebrannten Keramikkörper, Wabenstruktur und Abgasumwandlungsvorrichtung und Trocknungsvorrichtung
Procédés de fabrication d'un corps brûlé en céramique, structure en nid d'abeille, dispositif de conversion de gaz d'échappement et appareil de séchage

(30) Priority: 06.10.2010 WO PCT/JP2010/067595
(43) Date of publication of application: 11.04.2012
(73) Proprietor: Ibiden Co., Ltd., Ogaki-shi, Gifu 503-8604 (JP)
(72) Inventor: Kudo, Ryoichi, Gifu, 501-0695 (JP); Sonoo, Tsubasa, Gifu, 501-0695 (JP); Ohashi, Tadafumi, Gifu, 501-0695 (JP); Haga, Yuji, Gifu, 501-0695 (JP)
(74) Representative: HOFFMANN EITLE

(56) References cited:
- EP-A1- 1 974 796
- WO-A1-2008/121263
- CN-A- 101 077 836
- JP-A- 2006 327 833
- US-A1- 2002 084 555
- US-A1- 2009 291 824
- METAXAS A C: "Microwave heating", POWER ENGINEERING JOURNAL, INSTITUTION OF ELECTRICAL ENGINEERS, HITCHIN, GB, vol. 5, no. 5, 1 September 1991 (1991-09-01), pages 237-247, XP009154636, ISSN: 0950-3366
- THOSTENSON E T ET AL: "Microwave processing: fundamentals and applications", COMPOSITES PART A: APPLIED SCIENCE AND MANUFACTURING, ELSEVIER SCIENCE PUBLISHERS B.V., AMSTERDAM, NL, vol. 30, no. 9, 1 September 1999 (1999-09-01), pages 1055-1071, XP004171651, ISSN: 1359-835X, DOI: 10.1016/S1359-835X(99)00020-2

## Description

### BACKGROUND OF THE INVENTION

### 1. Field of the Invention

The present invention relates to a manufacturing method of a ceramic fired body, a manufacturing method of a honeycomb structure, a manufacturing method of an exhaust gas converting device, and a drying apparatus.

### 2. Description of the Related Art

An example exhaust gas conversion system uses ammonia and reduces NOx to nitrogen such as a Selective Catalytic Reduction (SCR) system. In the SCR system, a catalytic agent for absorbing ammonia and reducing the NOx to nitrogen may be zeolite.

Patent Document 1 discloses a honeycomb structure including a honeycomb unit. The honeycomb unit contains zeolite and inorganic binder, and is formed by aligning plural through holes (cells) in longitudinal directions interposing separating walls. In manufacturing the honeycomb structure, after manufacturing a honeycomb molded body with extrusion molding of a raw material paste containing zeolite, inorganic binder and water, a microwave drying apparatus is used to dry the honeycomb molded body.

### [Prior Art Document]

### [Patent Document]

[Patent Document 1] International Publication Pamphlet No. WO 09/141897

However, if the honeycomb molded body is dried using a microwave drying apparatus, although the temperature of the honeycomb molded body containing water increases, the temperature of an atmosphere existing around the honeycomb molded body cannot easily increase. Therefore, heat around an outer peripheral portion of the honeycomb molded body is dissipated in the atmosphere. At this time, the honeycomb molded body containing zeolite and the inorganic binder has a small thermal conductivity. Therefore, the heat inside the honeycomb molded body is not effectively conducted to the outer peripheral portion to thereby increase a temperature difference between the inside and the outer peripheral portion. The increased temperature difference may easily cause cracks to form in the honeycomb molded body. Meanwhile, if the output of the microwave drying apparatus is reduced to reduce the temperature difference between the inside and the outer peripheral portion of the honeycomb molded body, a long time is necessary to dry the honeycomb molded body and manufacturing efficiency is degraded.

### SUMMARY OF THE INVENTION

Accordingly, embodiments of the present invention may provide a novel and useful manufacturing method of a ceramic fired body, a manufacturing method of a honeycomb structure, a manufacturing method of an exhaust gas converting device, and a drying apparatus solving one or more of the problems discussed above.

Other objects, features, and advantages of the present invention will become more apparent from the following detailed description when read in conjunction with the accompanying drawings.

A manufacturing method of a ceramic fired body of the present invention includes making ceramic molded body by forming a composition of ceramic raw material containing water; drying the ceramic molded body by irradiating the ceramic molded body with a microwave under a depressurized atmosphere of 1 KPa or more and 50 kPa or less; and making the ceramic fired body by firing the ceramic molded body.

It is preferable, in drying the ceramic molded body, to provide a drying apparatus which includes a drying room for drying the ceramic molded body, a depressurizing unit for depressurizing an inside of the drying room, and a microwave irradiating unit for irradiating the ceramic molded body inside the drying room with the microwave.

It is preferable that the drying apparatus is a continuous type.

It is preferable that the ceramic molded body has plural through holes arranged in parallel in their longitudinal directions while being separated by separating walls.

It is preferable that the composition of ceramic raw material includes zeolite and an inorganic binder.

It is preferable that the composition of ceramic raw material further includes at least one of an inorganic fiber, a flake-like material, a tetrapod-like material, and a three-dimensional needle-like material.

It is preferable that the zeolite is phosphate zeolite.

It is preferable that the drying of the ceramic molded body is conducted by irradiating both end surfaces of the ceramic molded body in its longitudinal direction with infrared rays while irradiating the ceramic molded body with the microwave.

It is preferable that the irradiating of the both end surfaces of the ceramic molded body in its longitudinal direction with the infrared rays uses a lamp heater, a halogen heater, or a far infrared ray (FIR) heater.

It is preferable that a drying uses the drying apparatus which includes a drying room for drying the ceramic molded body, a depressurizing unit for depressurizing an inside of the drying room, and a microwave irradiating unit for irradiating the ceramic molded body inside the drying room with the microwave; and an infrared ray irradiating unit for irradiating the both end surfaces of the ceramic molded body in its longitudinal direction with the infrared rays.

It is preferable that the drying apparatus is a continuous type.

A manufacturing method of a honeycomb structure of the present invention includes the manufacturing method of the ceramic fired body of the present invention.

A manufacturing method of an exhaust gas converting device of the present invention includes the manufacturing method of the honeycomb structure of the present invention.

A drying apparatus that dries ceramic molded body having plural through holes arranged in parallel in their longitudinal directions while being separated by separating walls includes a drying room configured to dry the ceramic molded body; a depressurizing unit configured to depressurize an inside of the drying room to a depressurised atmosphere of 1 kPa or more and 50 kPa or less; a microwave irradiating unit configured to irradiate the ceramic molded body inside the drying room with a microwave; and an infrared ray irradiating unit configured to irradiate both end surfaces of the ceramic molded body in its longitudinal direction with infrared rays.

It is preferable that the infrared ray irradiating unit is a lamp heater, a halogen heater, or a far infrared ray (FIR) heater.

It is preferable that the drying apparatus is a continuous type.

### BRIEF DESCRIPTION OF DRAWINGS

FIG. 1 is a perspective view of examples honeycomb structure manufactured in embodiments of the present invention.
FIG. 2 is a side view of an example drying apparatus of the embodiments of the present invention.
FIG. 3 is a plan view of the example drying apparatus of the embodiments of the present invention.
FIG. 4 is a cross-sectional view of an example exhaust gas converting device manufactured in the embodiments of the present invention.
FIG. 5 is a perspective view of another example honeycomb structure manufactured in the embodiments of the present invention.
FIG. 6 is a perspective view of a honeycomb unit forming the honeycomb structure of FIG. 5.

### DESCRIPTION OF THE PREFERRED EMBODIMENTS

Preferred embodiments of the present invention are described below with reference to the accompanying drawings.

Reference symbols typically designate as follows:
10, 10': honeycomb structure;
11, 11': honeycomb unit;
11a: through hole;
11b: separating wall;
12: outer peripheral coating layer;
13: adhesive layer;
20: holding sealing material;
30: metallic pipe;
100 : drying apparatus;
130: drying room;
131: microwave radiating device;
132 : infrared ray irradiator; and
1000 : exhaust gas converting device.

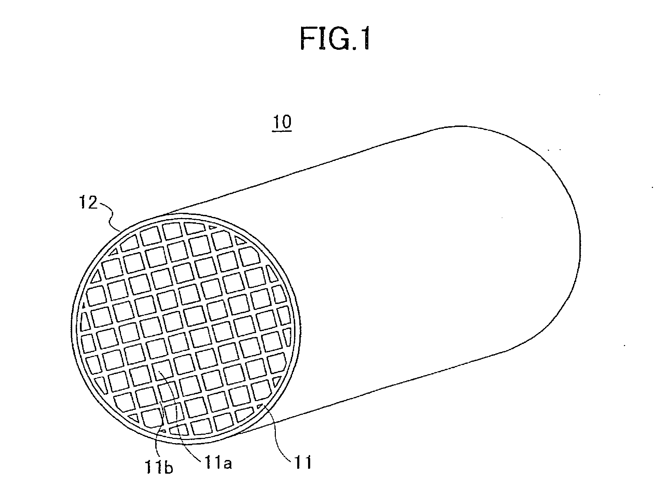

An example manufacturing method of a honeycomb structure 10 of the embodiment illustrated in FIG. 1 is described. First, a raw material paste containing water, zeolite and inorganic binder are used, and the raw material paste undergoes extrusion molding to form ceramic molded body in a cylindrical shape in which plural through holes are arranged in parallel in their longitudinal directions while being separated by separating walls.

The ceramic molded body is fired to make a ceramic fired body (a honeycomb unit). When necessary, an outer peripheral coating layer is formed. Thus, the honeycomb structure 10 in the cylindrical shape including the single honeycomb unit is formed.

Zeolite contained in the raw material paste is not specifically limited and may be one or combinations of two or more of β-type zeolite, Y-type zeolite, ferrierite, ZSM-5 zeolite, mordenite, faujasite, zeolite A, zeolite L and phosphate zeolite. Phosphate zeolite is preferable because of its NOx conversion capability.

Phosphate zeolite may be SAPO such as SAPO-5, SAPO-11 and SAPO-34, MeAPO, MeAPSO, and the like.

It is preferable in zeolite that ions are exchanged by at least one of a copper ion and an iron ion in consideration of the NOx conversion capability.

The Zeolite that has undergone the ion exchange with at least one of the copper ion and the iron ion preferably has the amount of ion exchange of 1.0 to 5.0 mass%. If the amount of ion exchange of zeolite is less than 1.0 mass%, the NOx conversion capability becomes insufficient. On the other hand, if the amount of ion exchange of zeolite exceeds 5.0 mass%, a framework geometry of zeolite is broken by an influence of water and heat from a site where the ion is exchanged and a metallic ion that has undergone the ion exchange becomes a metallic oxide and the NOx conversion capability becomes insufficient.

Zeolite may undergo the ion exchange with a metallic ion other than those described above.

Average particle diameters of a primary particle and a secondary particle of zeolite are preferably 0.5 to 10 µm, more preferably 1 to 5 µm. If the average particle diameter of the primary particle or the secondary particle of zeolite is 0.5 µm or less, a porosity of the honeycomb unit 11 is reduced by a filling effect of zeolite. As a result, an exhaust gas does not easily penetrate into an inside of the separating wall. Thus, zeolite is not effectively used for conversion of NOx. On the other hand, if the average particle diameter of the primary particle or the secondary particle of zeolite exceeds 10 µm, a surface area of the honeycomb unit 11 becomes small and therefore an area of zeolite contacting the exhaust gas becomes small. As a result, the NOx conversion capability becomes insufficient.

The content of zeolite per an apparent volume in the honeycomb unit 11 is preferably 230 to 360 g/L. If the content of zeolite per the apparent volume in the honeycomb unit 11 is less than 230 g/L, the NOx conversion capability becomes insufficient. On the other hand, if the content of zeolite per the apparent volume in the honeycomb unit 11 is more than 360 g/L, the content of the inorganic binder in the honeycomb unit 11 is reduced. Then, the strength of the honeycomb unit 11 may become insufficient or an aperture ratio of the honeycomb unit 11 may become small to thereby increase a pressure loss.

The inorganic binder is not specifically limited and may be one or combinations of two or more solid contents of alumina sol, silica sol, titania sol, water glass, sepiolite, attapulgite, boehmite, and the like.

The content of the inorganic binder in the honeycomb unit 11 is preferably 5 to 30 mass%, more preferably 10 to 20 mass%. If the content of the inorganic binder in the honeycomb unit 11 is less than 5 mass%, the strength of the honeycomb unit 11 becomes small. On the other hand, if the content of the inorganic binder in the honeycomb unit 11 exceeds 30 mass%, the content of zeolite in the honeycomb unit 11 becomes small to thereby make the NOx conversion capability insufficient.

The raw material paste may preferably to contain one or more selected from a group including an inorganic fiber, a flake-like material, a tetrapod-like material and a three-dimensional needle-like material (e.g., a three-dimensional acicular material) in order to make the strength of the honeycomb unit 11 great.

The inorganic fiber contained in the raw material paste is not specifically limited as long as the strength of the honeycomb unit 11 is improved, and may be one or combinations of two or more of alumina, silica, silicon carbide, silica alumina, glass, potassium titanate, aluminum borate, and the like.

An aspect ratio of the inorganic fiber is preferably 2 to 1000, more preferably 10 to 500. If the aspect ratio of the inorganic fiber is less than 2, an effect of improving the strength of the honeycomb unit 11 is lowered. On the other hand, if the aspect ratio of the inorganic fiber exceeds 1000, a die may be clogged by the inorganic fiber in the extrusion molding of the honeycomb unit 11 or the inorganic fiber may be broken to reduce an effect of improving the strength of the honeycomb unit 11.

The flake-like material may be in a flat shape, and preferably has a thickness of 0.2 to 5 µm, a maximum length of 10 to 160 µm, and a ratio of the maximum length to the thickness of 3 to 250.

The flake-like material contained in the raw material paste is not specifically limited as long as the strength of the honeycomb unit 11 is improved, and may be one or combinations of two or more of glass, white mica, alumina, silica and the like.

The tetrapod-like material may have needle-like portions extending in three-dimensional directions. The average length of the needle-like portions are preferably 5 to 30 µm and the average diameter is preferably 0.5 to 5 µm.

The tetrapod-like material may be manocrystal, whisker, and the like.

The material of the tetrapod-like material contained in the raw material paste is not specifically limited and may be one or combinations of two or more of zinc oxide or the like.

The three-dimensional needle-like material is formed by connecting the needle-like portions by an inorganic material such as glass at around centers of the needle-like portions, and preferably has the average needle length of 5 to 30 µm and the average diameter of 0.5 to 5 µm.

The three-dimensional needle-like material may be formed by arranging plural needle-like portions in the three-dimensional directions. The diameter of the needle-like portion is preferably 0.1 to 5 µm, the length of the needle-like portion is preferably 0.3 to 30 µm, and a ratio of the length relative to the diameter is preferably 1.4 to 50.

The three-dimensional needle-like material contained in the raw material paste is not specifically limited, and may be one or combinations of two or more alumina, silica, silicon carbide, silica alumina, glass, potassium titanate, aluminum borate, boehmite, zinc oxide, and the like.

The content of one or more materials in the honeycomb unit 11 selected from a group including the inorganic fiber, the flake-like material, the tetrapod-like material and the three-dimensional needle-like material is preferably 3 to 50 mass%, more preferable 3 to 30 mass%, further more preferably 5 to 20 mass%. If the content of one or more materials in the honeycomb unit 11 selected from a group including the inorganic fiber, the flake-like material, the tetrapod-like material and the three-dimensional needle-like material is less than 3 mass%, an effect of improving the strength of the honeycomb unit 11 is reduced. Meanwhile, if the content of one or more materials in the honeycomb unit 11 selected from a group including the inorganic fiber, the flake-like material, the tetrapod-like material and the three-dimensional needle-like material is more than 50 mass%, the content of the zeolite in the honeycomb unit 11 is reduced and the NOx conversion capability is degraded.

An organic binder, a dispersing medium, a molding auxiliary agent or the like may be appropriately added to the raw material paste when necessary.

The organic binder is not specifically limited, and may be one or combinations of two of methyl cellulose, carboxymethyl cellulose, hydroxyethyl cellulose, poliethylene glycol, phenol resin, epoxy resin, and the like. The additive amount of the organic binder is preferably 1 to 10% relative to the total mass of the zeolite, the inorganic binder, the inorganic fiber, the flake-like material, the tetrapod-like material and the three-dimensional needle-like material.

The dispersing medium is not specifically limited, and may be one or combinations of two or more of water, an organic solvent such as benzene, alcohol such as methanol or the like. The molding auxiliary agent is not specifically limited, and may be one or combinations of two or more of ethylene glycol, dextrin, fatty acid, fatty acid soap, polyalcohol, and the like.

In preparing the raw material paste, it is preferable to mix and knead. A mixer, an attritor or the like can be used for mixing and a kneader or the like may be used for kneading.

Next, the drying apparatus of the present invention is used to dry the obtained ceramic molded body.

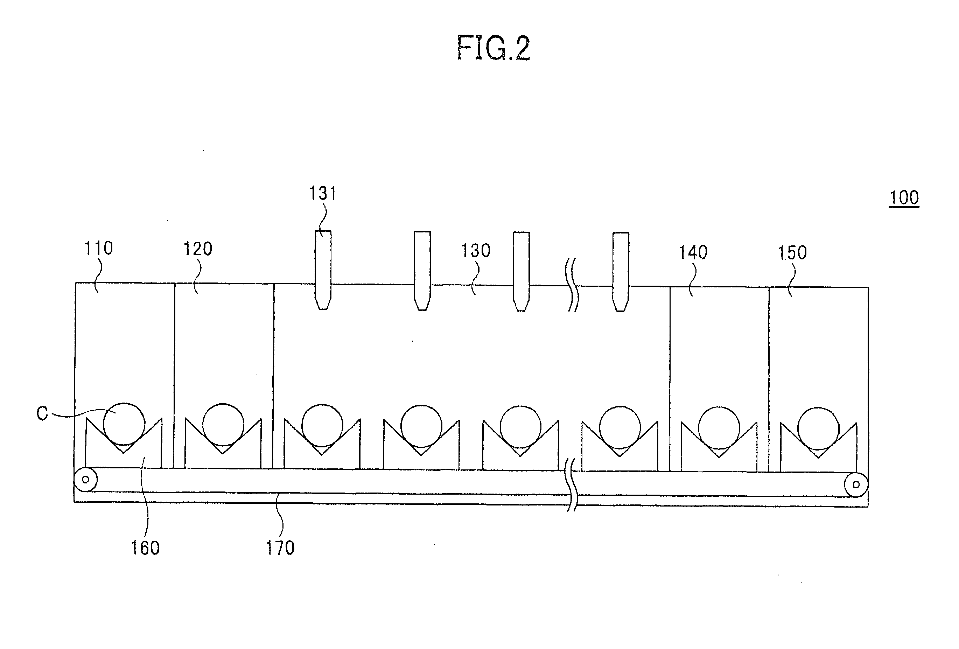

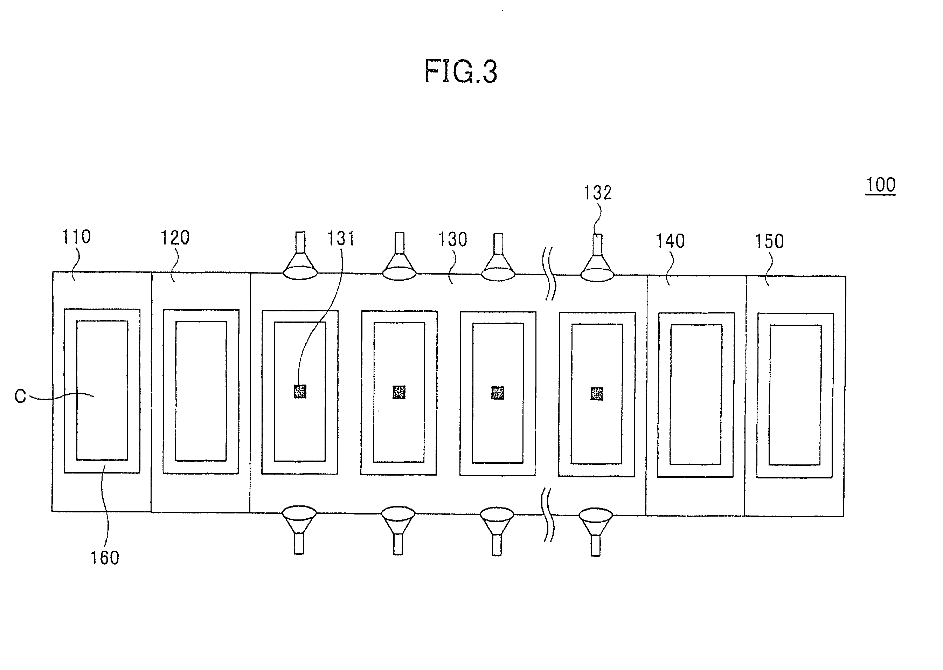

FIG. 2 and FIG. 3 illustrate an example drying apparatus of the embodiment of the present invention. The drying apparatus 100 is a continuous type and includes a buffer room 110, a depressurizing room 120, a drying room 130, a depressurizing room 140, and a buffer room 150. The buffer room 110, the depressurizing room 120, the drying room 130, the repressurizing room 140, and the buffer room 150 are sequentially arranged in a direction of carrying the ceramic molded body C. The ceramic molded body C is fixed to a jig 160 and carried by the conveyer 170. At this time, the depressurizing room 120, the drying room 130 and the repressurizing room 140 can be depressurized by a decompression device (not illustrated). A microwave radiating device 131 is installed on an upper portion of the drying room 130 to irradiate the ceramic molded body C with microwaves. Infrared ray irradiators 132 for irradiating side surfaces of the ceramic molded body C in its longitudinal direction are installed in double side surfaces of the ceramic molded body C.

Doors may be provided between the buffer room 110 and the depressurizing room 120, between the depressurizing room 120 and the drying room 130, between the drying room 130 and the repressurizing room 140, and between the repressurizing room 140 and the buffer room 150 to maintain the depressurized pressure of the depressurizing room 120 and the drying room 130. The doors can open or close when the ceramic molded body C passes.

The decompression device is not specifically limited and may be a vacuum pump.

The microwave radiating device 131 is not specifically limited as long as microwaves can irradiate with the microwave radiating device 131.

The infrared ray irradiator 132 is not specifically limited, and may be a lamp heater, a halogen heater, a far infrared rays (FIR) heater, a LT heater, a colce heater, a carbon heater, a colche heater, a quartz heater, and the like. The infrared ray irradiator 132 may preferably be the lamp heater, the halogen heater, or the FIR heater.

Next, a method of drying the ceramic molded body C with the drying apparatus 100 is described. In the buffer room 110, the ceramic molded body C is fixed to the jig 160 so that the longitudinal direction of the ceramic molded body C is positioned substantially perpendicular to the carrying direction of the conveyer 170 on a horizontal surface of the conveyer 170. Then, the ceramic molded body C is carried by the conveyer 170 to the drying room 130 depressurized by the decompression device (not illustrated) via the depressurizing room 120 depressurized by the decompression device (not illustrated).

At this time, the pressure of the drying room is 1 to 50 kPa, preferably 2 to 50 kPa, more preferably 2 to 20 kPa, still more preferably 3 to 10 kPa. If the pressure of the drying room is less than 1 KPa, electric discharge easily occurs. On the other hand, if the pressure of the drying room exceeds 50 kPa, a temperature difference between the inside of the ceramic molded body C and the outer peripheral portion becomes large and cracks in the ceramic molded body easily occur.

Although the drying room is not ordinarily heated, the drying room may be heated when necessary.

An atmosphere of the drying room 130 is ordinarily an air. However, the air may be replaced by an inert gas such as nitrogen.

Next, when the ceramic molded body C is delivered to a drying position inside the drying room 130, the ceramic molded body C is prevented from being delivered by a predetermined time duration. During the prevention of the delivery, the microwave radiating device 131 irradiates the ceramic molded body with a microwave and an infrared ray irradiator 132 irradiates both end surfaces of the ceramic molded body C in its longitudinal direction with infrared rays.

When the ceramic molded body C is irradiated by the microwaves, the temperature of the ceramic molded body C increases and water contained in the ceramic molded body evaporates. At this time, because heat in the outer peripheral portion of the honeycomb molded body C is dissipated, a temperature difference occurs between the inside and the outer peripheral portion of the ceramic molded body C. However, since the pressure inside the drying room is 1 to 50 kPa, the temperature at which water evaporates decreases and a temperature difference between the inside and the outer peripheral portion of the honeycomb molded body becomes small. As a result, it is possible to prevent cracks from occurring in the ceramic molded body C.

The outer peripheral portion of the ceramic molded body C includes the both end surfaces of the ceramic molded body C in its longitudinal direction.

On the other hand, in the both end surfaces of the ceramic molded body in its longitudinal direction, heat quantity dissipated from a center portion of the ceramic molded body in its longitudinal direction is large. When the both end surfaces of the ceramic molded body in its longitudinal direction are irradiated by infrared rays, the both end surfaces of the ceramic molded body in its longitudinal direction increase and a temperature difference between the central portion and the both end portions of the ceramic molded body in its longitudinal direction can be made further small.

The doses of the microwaves and the infrared rays are appropriately adjustable in association with the material forming the ceramic molded body C, the size of the ceramic molded body C, the pressure of the drying room 130 or the like.

The delivery of the ceramic molded body C with the conveyer 170 is stopped for predetermined time durations at plural drying positions, and the ceramic molded body C can be dried.

Further, if the temperature difference between the inside and the outer peripheral portion of the ceramic molded body can be reduced without irradiating the both end surfaces of the ceramic molded body in its longitudinal direction with infrared rays, the infrared rays may not be irradiated.

The ceramic molded body C dried as described above is delivered by the conveyer 170 to the buffer room 170 via the repressurizing room 140 which is depressurized by the decompression device (not illustrated). Thereafter, the dried ceramic molded body is recovered.

Further, the recovered ceramic molded body is degreased. A condition for degreasing the ceramic molded body is not specifically limited and is appropriately selectable depending on the kind and the amount of the organic substance. The condition is preferably two hours at a temperature of 400°C.

By firing the degreased ceramic molded body, the honeycomb unit 11 in a cylindrical shape is acquired. The firing temperature is preferably 600 to 1200°C, more preferably 600 to 1000°C. If the firing temperature is less than 600°C, a condensing reaction with the inorganic binder does not proceed and the strength of the honeycomb unit 11 is lowered. On the other hand, if the firing temperature is more than 1200°C, calcination of zeolite is too rapid which causes a reduction of reaction sites of zeolite.

Next, a paste for the outer peripheral coating layer is coated on the outer peripheral surfaces of the honeycomb units 11 in a cylindrical shape except for the both ends of the honeycomb units 11.

The paste for the outer peripheral coating layer is not specifically limited and may be a mixture of an inorganic binder and an inorganic particle, a mixture of an inorganic binder and an inorganic fiber, and a mixture of an inorganic binder, an inorganic particle, an inorganic fiber, and the like.

The paste for the outer peripheral coating layer may further contain the organic binder.

The organic binder is not specifically limited and may be one or combinations of two or more of polyvinyl alcohol, methyl cellulose, ethyl cellulose, carboxymethyl cellulose, and the like.

Next, the honeycomb unit on which the paste for the outer peripheral coating layer is coated is dried and solidified to thereby acquire the honeycomb structure 10 in the cylindrical shape. If the organic binder is contained in the paste for the outer peripheral coating layer, it is preferable to degrease the honeycomb unit before coating. The degreasing condition can be appropriately selected depending on the kind and the quantity of the organic substance and may be a temperature of 700°C for a time of 20 minutes.

It is possible to exchange ions of zeolite by immersing the honeycomb unit 11 in an aqueous solution containing at least one of copper ions and iron ions. A raw material paste containing zeolite of which ions are exchanged by at least one of copper ions and iron ions may be used to manufacture the honeycomb unit.

The honeycomb structure 10 includes a honeycomb unit 11, which is formed by the through holes 11a and the separating walls 11b for separating the through holes 11a and arranged in the longitudinal direction of the honeycomb unit 11, and an outer peripheral coating layer 12 formed on the outer peripheral surface of the honeycomb unit 11.

The honeycomb unit 11 preferably has a porosity of 25 to 40%. This is because if the porosity of the honeycomb unit 11 is less than 25%, an exhaust gas does not easily penetrate inside the separating wall 11b and zeolite is not effectively used for conversion for NOx. On the other hand, if the porosity of the honeycomb unit 11 exceeds 40%, the strength of the honeycomb unit 11 becomes insufficient.

It is preferable that the aperture (open area) ratio of the honeycomb unit 11 on a cross-sectional surface perpendicular to the longitudinal direction of the honeycomb unit 11 is 50 to 75%. If the aperture ratio of the honeycomb unit 11 in the cross-sectional surface perpendicular to the longitudinal direction of the honeycomb unit 11 is less than 50%, zeolite is not effectively used for the conversion of NOx. On the other hand, if the aperture ratio of the honeycomb unit 11 in the cross-sectional surface perpendicular to the longitudinal direction of the honeycomb unit 11 exceeds 75%, the strength of the honeycomb unit 11 becomes insufficient.

The honeycomb unit 11 preferably has the density of the through holes 11a in the cross-sectional surface perpendicular to the longitudinal direction of the honeycomb unit 11 of 31 to 140 holes/cm². If the density of the through holes 11a in the cross-sectional surface perpendicular to the longitudinal direction of the honeycomb unit 11 is less than 31 holes/cm², zeolite does not easily contact the exhaust gas which causes degradation of the NOx conversion capability. On the other hand, if the density of the through holes 11a in the cross-sectional surface perpendicular to the longitudinal direction of the honeycomb unit 11 exceeds 140 holes/cm², a pressure loss of the honeycomb structure 10 increases.

The thickness of the separating walls 11b of the honeycomb unit 11 is preferably 0.10 to 0.50 mm, more preferably 0.15 to 0.35 mm. If the thickness of the separating wall 11b is less than 0.10 mm, the strength of the honeycomb unit 11 is degraded. On the other hand, if the thickness of the separating wall 11b exceeds 0.50 mm, the exhaust gas does not easily penetrate inside the separating wall 11b. As a result, zeolite is not effectively used for the conversion of NOx.

The outer peripheral coating layer 12 preferable has a thickness of 0.1 to 2 mm. If the thickness of the outer peripheral coating layer 12 is less than 0.10 mm, the strength of the honeycomb structure 10 is insufficiently improved. Meanwhile, if the thickness of the outer peripheral coating layer 12 exceeds 2 mm, the content of the phosphate zeolite per a unit volume in the honeycomb structure 10 decreases which causes a deterioration in the NOx conversion capability.

The honeycomb structure 10 is a cylindrical shape in FIG.2. However, the shape is not specifically limited and may be a rectangular pillar shape, a cylindroid shape, and the like. Further, the through hole 11a is a quadrangular pillar shape in FIG. 2. However, the shape is not specifically limited and may be a triangular pillar shape or a hexagonal pillar shape. The outer peripheral coating layer 12 may not be formed in the honeycomb structure 12.

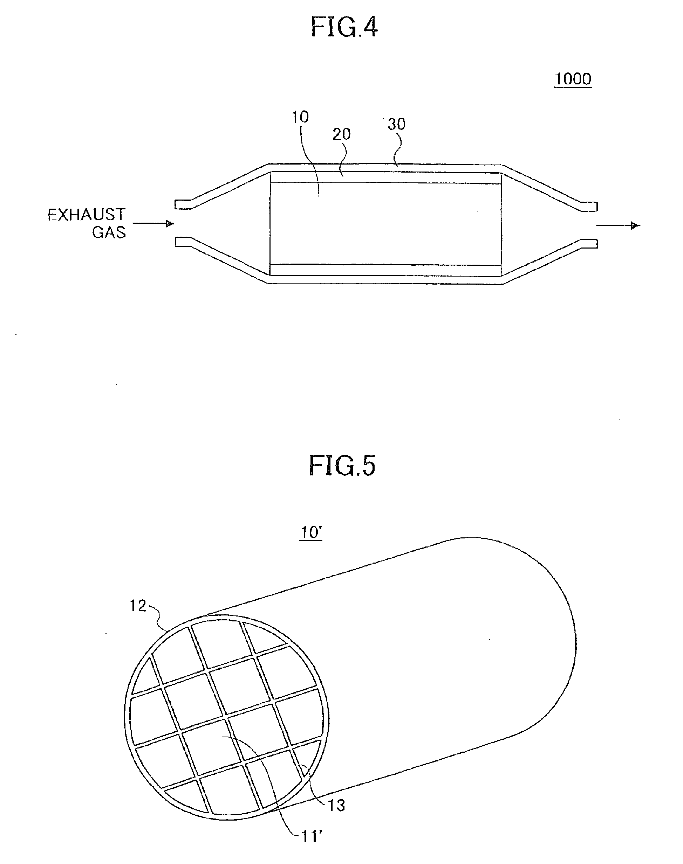

While the holding sealing material 20 is arranged on the outer periphery of the honeycomb structure 10, the honeycomb structure 10 and the holding sealing material 20 are canned into a metallic pipe 30 to thereby acquire the exhaust gas converting device 1000 illustrated in FIG. 4. An injector (not illustrated) such as an injection nozzle for injecting ammonia or a material producing ammonia by decomposing the material is provided in the exhaust gas converting device 1000 on an upper stream side of the honeycomb structure 10 relative to the direction of flowing the exhaust gas. Because ammonia is added to the exhaust gas, NOx contained in the exhaust gas is reduced by zeolite contained in the honeycomb unit 11.

The material producing ammonia by decomposing the material is not specifically limited as long as the material can generate ammonia. In consideration of the storage stability, urea aqueous solution is preferable.

Urea aqueous solution causes hydrolytic cleavage if it is heated by the exhaust gas to thereby generates ammonia.

Another example manufacturing method of the honeycomb structure 10' of the embodiment illustrated in FIG. 5 is described. In a similar manner to the honeycomb unit 11, the honeycomb unit 11' in a quadrangular pillar shape is manufactured. Then, a paste for an adhesive layer is coated on outer peripheral surfaces other than the both end surfaces of the honeycomb units 11'. Then, the honeycomb units 11' are sequentially bonded and dried to solidify. Thus, an assembly of the honeycomb units 11' is formed.

After manufacturing the assembly of the honeycomb unit 11', the assembly of the honeycomb unit 11' is cut to be in a cylindrical shape. It is possible to manufacture the assembly of the honeycomb unit 11' in the cylindrical shape by bonding the honeycomb units 11' shaped like a sector and a square in their cross-sections perpendicular to the longitudinal directions of the honeycomb units 11'.

The paste for the adhesive layer is not specifically limited and may be a mixture of an inorganic binder and an inorganic particle, a mixture of an inorganic binder and an inorganic fiber, and a mixture of an inorganic binder, an inorganic particle and an inorganic fiber.

The paste for the adhesive layer may contain an organic binder.

The organic binder is not specifically limited and may be one or combinations of two or more of polyvinyl alcohol, methyl cellulose, ethyl cellulose, carboxymethyl cellulose, and the like.

Next, a paste for the outer peripheral coating layer is coated on the outer peripheral surfaces of the assembly of the honeycomb units 11' in the cylindrical shape .

The paste for the outer peripheral coating layer is not specifically limited. The paste for the outer peripheral coating layer may contain the same material as the paste for the adhesive layer or a different material. The paste for the outer peripheral coating layer may have the same composition as the paste for the adhesive layer.

Next, the honeycomb unit 11 on which the paste for the outer peripheral coating layer is coated is dried and solidified to thereby acquire the honeycomb structure 10' in the cylindrical shape. If the organic binder is contained in the paste for the adhesive layer and/or the paste for the outer peripheral coating layer, it is preferable to degrease the honeycomb structure 10'. The degreasing condition can be appropriately selected depending on the kind and the quantity of the organic substance and may be a temperature of 700°C for a time of 20 minutes.

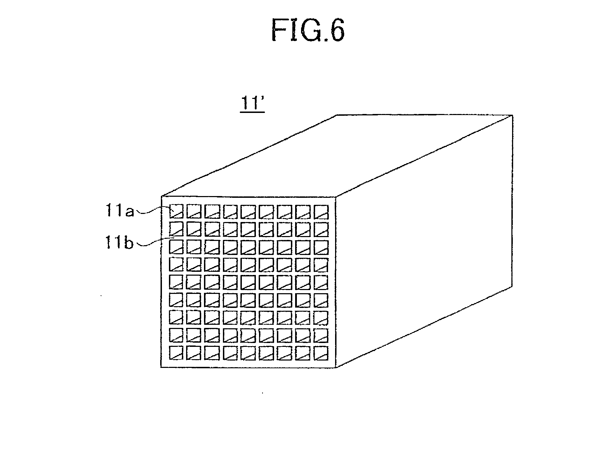

The honeycomb structure 10' is similar to the honeycomb structure 10 except for the feature that the plural honeycomb units 11', which are formed by the through holes 11a and the separating walls 11b for separating the through holes 11a and arranged in the longitudinal direction of the honeycomb unit 11 (see FIG. 6), are bonded by interposing the adhesive layer 13.

It is preferable that the cross-sectional area of the honeycomb unit 11' on a cross-sectional surface perpendicular to the longitudinal direction of the honeycomb unit 11 is 5 to 50 cm². If the cross-sectional area of the honeycomb unit 11' on the cross-sectional surface perpendicular to the longitudinal direction of the honeycomb unit 11 is less than 5 cm², the pressure loss of the honeycomb structure 10' increases. On the other hand, if the cross-sectional area of the honeycomb unit 11' on the cross-sectional surface perpendicular to the longitudinal direction of the honeycomb unit 11 exceeds 50 cm², the strength against thermal stress generated in the honeycomb unit 11 becomes insufficient.

The properties other than the cross-sectional area of the honeycomb unit 11' on the cross-sectional surface perpendicular to the longitudinal direction of the honeycomb unit 11 are similar to those in the honeycomb unit 11.

The thickness of the adhesive layer 13 is preferably 0.5 to 2 mm. If the thickness of the adhesive layer 13 is less than 0.5 mm, the adhesion strength of the honeycomb unit 11 becomes insufficient. On the other hand, if the thickness of the adhesive layer exceeds 2 mm, the pressure loss of the honeycomb structure 10' increases.

The honeycomb units 11' other than the honeycomb units 11' positioned in the outer peripheral portions of the honeycomb structure 10' are a quadrangular pillar shape. However, the shape is not specifically limited and may be a hexagonal pillar shape or the like.

The outer peripheral coating layer 12 may not be formed in the honeycomb structure 10'.

The honeycomb units 11 and 11' as the ceramic fired bodies have been described above. The shapes of the ceramic fired bodies are not specifically limited. The material of the ceramic fired bodies is not specifically limited and may be alumina, silica, titania, zirconia, ceria, mullite, zeolite, cordierite, aluminum titanate, silicon nitride, and the like.

A drying apparatus of the embodiment of the present invention is effective in manufacturing the ceramic fired body (honeycomb unit). Especially, the drying apparatus of the embodiment of the present invention is effective in manufacturing the honeycomb fired body (honeycomb unit) containing zeolite.

### Embodiments

### Example 1

SAPO-34 whose primary particle is of 3000 parts by mass and has an average particle diameter of 3 µm, boehmite being of 840 parts by mass and having a mean fiber diameter of 6 µm, alumina fiber being of 650 parts by mass and having a mean fiber length of 100 µm, methyl cellulose of 330 parts by mass, oleic acid of 330 parts by mass, and ion-exchange water of 1800 parts by mass are mixed and kneaded to manufacture a raw material paste.

Next, the raw material paste undergoes extrusion molding with an extrusion molding machine to thereby manufacture ceramic molded body having a square pillar shape. Thereafter, the drying apparatus 100 is used to make a pressure of the drying room 130 be 6.7 kPa. While the drying room 130 is not heated and the atmosphere inside the drying room is room air, the ceramic molded body is dried for 15 minutes (0.25 hours). The output of the microwave radiating device 131 is 6 kW. The infrared ray irradiator 132 is an infrared ray heater, and the output of the infrared ray heater is 150 W.

At this time, the temperature difference of the ceramic molded body between the inside and the outer peripheral portion is 2.5°C and a rate of incidence of the cracks of the ceramic molded body is 0%.

The temperature difference of the ceramic molded body between the inside and the outer peripheral portion is measured by an optical fiber type thermometer manufactured by Neoptix, Inc. at a central portion in the vicinity of the end surfaces of the ceramic molded body and at an edge in the vicinity of the end surface inside the drying room 130.

The rate of incidence of the cracks in the ceramic molded body is acquired by visual judgment of the cracks in the ceramic molded body of 100 pieces delivered into the buffer room 150.

The dried ceramic molded body is degreased at a temperature of 400°C for 5 hours. Thereafter, the degreased ceramic molded body is fired at a temperature of 700°C for 2 hours. Thus, the honeycomb unit 11' having a side of 38 mm and a length of 150 mm in a square pillar shape illustrated in FIG. 6 is manufactured. In the honeycomb unit 11', a density of the through hole 11a is 62 pieces/cm2 and the thickness of the separating wall is 0.28 mm.

Alumina fiber of 767 parts by mass whose mean fiber diameter is 0.5µm and mean fiber length of 15µm, silica glass of 2500 parts by mass, carboxymethyl cellulose of 17 parts by mass, silica sol of 600 parts by mass whose solid content is 30 mass%, polyvinyl alcohol of 167 parts by mass, a surface-active agent of 167 parts by mass, and alumina balloons of 17 parts by mass are mixed and kneaded to manufacture a paste for the heat resistant adhesive layer.

The paste for the adhesive layer is coated so that the thickness of the adhesive layer becomes 2mm, and the honeycomb units 11' as many as sixteen (16) are bonded. After the paste of the adhesive layer is dried at a temperature of 150 °C for a time of 10 minutes, a diamond cutter is used to cut the assembly of the honeycomb unit 11 having the square pillar shape so that the honeycomb unit 11' is a cylindrical shape and cross-sectional surfaces of the honeycomb unit 11' in perpendicular to the longitudinal direction of the honeycomb unit 11' is symmetric about a point. Thus, the assembly of the honeycomb unit 11' having the cylindrical shape is manufactured.

Further, after coating the outer peripheral surface of the assembly of the honeycomb unit 11' to have the thickness of the outer peripheral coating layer of 1mm, a microwave drying apparatus or a hot air drying apparatus is used to dry the paste of the adhesive layer at a temperature of 150°C and a time for 10 minutes to dry and solidify the honeycomb structure 10'. Further, the honeycomb structure 10' is degreased for 2 minutes. Then, the honeycomb structure 10' in a cylindrical shape having a diameter of 143.8 mm and a height of 150mm illustrated in FIG. 5 is manufactured.

While a holding sealing material (a mat made of an inorganic fiber) 20 is arranged on the outer periphery of the honeycomb structure 10', the honeycomb structure 10' and the holding sealing material 20 are canned into a metallic pipe (a shell) 30 to thereby acquire an exhaust gas converting device 2 illustrated in FIG. 2.

### Example 2

A honeycomb structure 10' and an exhaust gas converting device are manufactured in a similar manner to Example 1 except that the ceramic molded body is not irradiated by the infrared rays at a time of drying the ceramic molded body.

At this time, the temperature difference of the ceramic molded body between the inside and the outer peripheral portion is 14.8°C and a rate of incidence of cracks of the ceramic molded body is 5%.

### Example 3

A honeycomb structure 10' and an exhaust gas converting device are manufactured in a similar manner to Example 2 except that the pressure inside the drying room 130 is 2.0 kPa.

At this time, the temperature difference of the ceramic molded body between the inside and the outer peripheral portion is 1.2°C and a rate of incidence of the cracks of the ceramic molded body is 0%.

### Example 4

A honeycomb structure 10' and an exhaust gas converting device are manufactured in a similar manner to Example 2 except that the pressure inside the drying room 130 is 50.0 kPa.

At this time, the temperature difference of the ceramic molded body between the inside and the outer peripheral portion is 20.4°C and a rate of incidence of the cracks of the ceramic molded body is 8%.

### Comparative Example 1

A honeycomb structure and an exhaust gas converting device are manufactured in a similar manner to Example 2 except that the pressure inside the drying room 130 is 101.3 kPa.

At this time, the temperature difference of the ceramic molded body between the inside and the outer peripheral portion is 35.0°C and a rate of incidence of the cracks of the ceramic molded body is 100%.

### Comparative Example 2

A honeycomb structure and an exhaust gas converting device are manufactured in a similar manner to Example 1 except that the pressure inside the drying room 130 is 86.7 kPa, the output of the microwave radiating device 131 is 60 W, the outputs of the infrared ray heaters are 10 W, and the ceramic molded body is dried for 24 hours.

At this time, the temperature difference of the ceramic molded body between the inside and the outer peripheral portion is 10.4°C and a rate of incidence of the cracks of the ceramic molded body is 0%.

### Comparative Example 3

A honeycomb structure and an exhaust gas converting device are manufactured in a similar manner to Example 2 except that the pressure inside the drying room 130 is 86.7 kPa.

At this time, the temperature difference of the ceramic molded body between the inside and the outer peripheral portion is 32.1°C and a rate of incidence of the cracks of the ceramic molded body is 100%.

Drying condition and evaluation results of the ceramic molded body are illustrated in Table 1.

**Table 1**

| | DRYING CONDITION | | | CERAMIC MOLDED BODY | |
|---|---|---|---|---|---|
| | PRESSURE INSIDE DRYING ROOM [kPa] | IRRADIATION OF INFRARED RAY | DRYING TIME [hours] | TEMPERATURE DIFFERENCE BETWEEN INSIDE AND OUTER PERIPHERAL PORTION [°C] | INCIDENCE RATE OF CRACK [%] |
| EXAMPLE 1 | 67 | EXIST | 0.25 | 2.5 | 0 |
| EXAMPLE 2 | 6.7 | NOT EXIST | 0.25 | 14.8 | 5 |
| EXAMPLE 3 | 20 | NOT EXIST | 0.25 | 1.2 | 0 |
| EXAMPLE 4 | 50.0 | NOT EXIST | 0.25 | 20.4 | 8 |
| COMPARATIVE EXAMPLE 1 | 101.3 | NOT EXIST | 0.25 | 35.0 | 100 |
| COMPARATIVE EXAMPLE 2 | 86.7 | EXIST | 24 | 10.4 | 0 |
| COMPARATIVE EXAMPLE 3 | 86.7 | NOT EXIST | 0.25 | 32.1 | 100 |

Referring to Table 1, when the honeycomb units 11' of Examples 1 to 4 are manufactured, even if a time for drying the ceramic molded body is 15 minutes (0.25 hours), the temperature difference between the inside and the outer peripheral portion of the ceramic molded body becomes small to thereby prevent the cracks from forming in the ceramic molded body. With Example 1, if the both end surfaces of ceramic molded body in its longitudinal direction is irradiated by infrared rays to dry the ceramic molded body, the temperature difference between the inside and the outer peripheral portion becomes small to thereby further prevent the cracks from forming in the ceramic molded body.

On the other hand, when the honeycomb units of Comparative Examples 1 and 3 are manufactured, if the time for drying the ceramic molded body is 15 minutes (0.25 hours), the pressure inside the drying room 130 is more than 50 kPa. Therefore, it is assumed that the temperature difference between the inside and the outer peripheral portion of the ceramic molded body becomes large to thereby easily form cracks in the ceramic molded body.

When the honeycomb unit of Comparative Example 2 is manufactured, the pressure inside the drying room is more than 50 kPa. Therefore, in order to prevent cracks from forming, it is necessary to decrease the output of the microwave radiating device 131 and irradiate the both sides of the ceramic molded body in the longitudinal direction to dry the ceramic molded body for 24 hours.

According to the embodiment of the present invention, it is possible to provide a manufacturing method of a ceramic fired body of which cracks can be prevented from forming and which can be dried within a short time, a manufacturing method of a honeycomb structure using the manufacturing method of a ceramic fired body, and a manufacturing method of an exhaust gas converting device. Further, it is possible to provide a drying apparatus which can be used for the manufacturing method of the ceramic fired body.

## Claims

1. A manufacturing method of a ceramic fired body (11, 11') comprising:
making a ceramic molded body by forming a composition of ceramic raw material containing water;
drying the ceramic molded body by irradiating the ceramic molded body with a microwave under a depressurized atmosphere of 1 kPa or more and 50 kPa or less; and
making the ceramic fired body (11, 11') by firing the ceramic molded body.

2. The manufacturing method of the ceramic fired body (11, 11') according to claim 1,
wherein the drying uses a drying apparatus (100) which includes a drying room (130) for drying the ceramic molded body, a depressurizing unit for depressurizing an inside of the drying room (130), and a microwave irradiating unit (131) for irradiating the ceramic molded body inside the drying room (130) with the microwave.

3. The manufacturing method of the ceramic fired body (11, 11') according to claim 2,
wherein the drying apparatus (100) is a continuous type.

4. The manufacturing method of the ceramic fired body (11, 11') according to any one of claims 1 to 3,
wherein the ceramic molded body has plural through holes (11a) arranged in parallel in their longitudinal directions while being separated by separating walls (11b).

5. The manufacturing method of the ceramic fired body (11, 11') according to claim 4,
wherein the composition of the ceramic raw material further includes zeolite and an inorganic binder.

6. The manufacturing method of the ceramic fired body (11, 11') according to claim 5,
wherein the composition of ceramic raw material further includes at least one of an inorganic fiber, a flake-like material, a tetrapod-like material, and a three-dimensional needle-like material.

7. The manufacturing method of the ceramic fired body (11, 11') according to claim 5 or claim 6,
wherein the zeolite is phosphate zeolite.

8. The manufacturing method of the ceramic fired body (11, 11') according to any one of claims 4 to 7,
wherein the drying of the ceramic molded body is conducted by irradiating both end surfaces of the ceramic molded body in its longitudinal direction with infrared rays while irradiating the ceramic molded body with the microwave.

9. The manufacturing method of the ceramic fired body (11, 11') according to claim 8,
wherein the irradiating of the both end surfaces of the ceramic molded body in its longitudinal direction with the infrared rays uses a lamp heater, a halogen heater, or a far infrared ray (FIR) heater.

10. The manufacturing method of the ceramic fired body (11, 11') according to claim 8 or 9,
wherein a drying uses the drying apparatus (100) which includes a drying room (130) for drying the ceramic molded body, a depressurizing unit for depressurizing an inside of the drying room (130), and a microwave irradiating unit (131) for irradiating the ceramic molded body inside the drying room (130) with the microwave; and
an infrared ray irradiating unit (132) for irradiating the both end surfaces of the ceramic molded body in its longitudinal direction with the infrared rays.

11. The manufacturing method of the ceramic fired body (11, 11') according to claim 10,
wherein the drying apparatus (100) is a continuous type.

12. A manufacturing method of a honeycomb structure (10, 10') comprising:
the manufacturing method of the ceramic fired body (11, 11') according to any one of the manufacturing methods of the ceramic fired body (11, 11') of claims 4 to 11.

13. A manufacturing method of an exhaust gas converting device (1000) comprising:
the manufacturing method of the honeycomb structure (10, 10') according to the manufacturing method of the honeycomb structure (10, 10') of claim 12.

14. A drying apparatus (100) that dries a ceramic molded body having plural through holes (11a) arranged in parallel in their longitudinal directions while being separated by separating walls (11b), the drying apparatus (100) comprising:
a drying room (130) configured to dry the ceramic molded body;
a depressurizing unit configured to depressurize an inside of the drying room (130) to a depressurized atmosphere of 1 kPa or more and 50 kPa or less;
a microwave irradiating unit (131) configured to irradiate the ceramic molded body inside the drying room (130) with a microwave; and
an infrared ray irradiating unit (132) configured to irradiate both end surfaces of the ceramic molded body in its longitudinal direction with infrared rays.

15. The drying apparatus (100) according to claim 14,
wherein the infrared ray irradiating unit (132) is a lamp heater, a halogen heater, or a far infrared ray (FIR) heater.

16. The drying apparatus (100) according to claim 14 or 15,
wherein the drying apparatus (100) is a continuous type.

## Patentansprüche

1. Herstellungsverfahren eines keramischen gebrannten Körpers (11, 11') mit:
Erzeugen eines keramischen Formkörpers durch Ausbilden einer Zusammensetzung von keramischen Rohmaterial, das Wasser enthält;
Trocknen des keramischen Formkörpers durch Bestrahlen des keramischen Formkörpers mit einer Mikrowelle unter einer druckreduzierten Atmosphäre von 1 kPa oder mehr und 50 kPa oder weniger; und
Erzeugen des keramischen gebrannten Formkörpers (11, 11') durch Brennen des keramischen Formkörpers.

2. Herstellungsverfahren des keramischen gebrannten Körpers (11, 11') nach Anspruch 1, wobei
das Trocknen eine Trocknungsvorrichtung (100) verwendet, die einen Trockenraum (130) zum Trocknen des keramischen Formkörpers, eine Druckreduzierungseinheit zum Druckreduzieren eines Inneren des Trockenraums (130) und eine Mikrowellenbestrahlungseinheit (131) zum Bestrahlen des keramischen Formkörpers mit der Mikrowelle im Inneren des Trockenraums (130), aufweist.

3. Herstellungsverfahren des keramischen gebrannten Körpers (11, 11`) nach Anspruch 2, wobei
die Trocknungsvorrichtung (100) eine Vorrichtung kontinuierlichen Typs ist.

4. Herstellungsverfahren des keramischen gebrannten Körpers (11, 11') nach einem der Ansprüche 1 bis 3, wobei
der keramische Formkörper mehrere Durchgangsöffnungen (11a) aufweist, die in ihren Längsrichtungen parallel zueinander angeordnet sind, wobei sie durch Trennwände (11b) getrennt sind.

5. Herstellungsverfahren des keramischen gebrannten Körpers (11, 11') nach Anspruch 4, wobei
die Zusammensetzung des keramischen Rohmaterials ferner Zeolith und einen anorganischen Binder aufweist.

6. Herstellungsverfahren des keramischen gebrannten Körpers (11, 11') nach Anspruch 5,
wobei die Zusammensetzung des keramischen Rohmaterials ferner zumindest eines aus einer anorganischen Faser, einem flockenartigen Material, einem tetrapodeartigen Material und einem dreidimensionalen nadelartigen Material aufweist.

7. Herstellungsverfahren des keramischen gebrannten Körpers (11, 11') nach Anspruch 5 oder Anspruch 6, wobei
der Zeolith, Phosphatzeolith ist.

8. Herstellungsverfahren des keramischen gebrannten Körpers (11, 11') nach einem der Ansprüche 4 bis 7, wobei
das Trocknen des keramischen Formkörpers durch Bestrahlen beider Endflächen des keramischen Formkörpers in dessen Längsrichtung mit Infrarotstrahlen durchgeführt wird, während der keramische Formkörper mit der Mikrowelle bestrahlt wird.

9. Herstellungsverfahren des keramischen gebrannten Körpers (11, 11') nach Anspruch 8, wobei
das Bestrahlen der beiden Endflächen des keramischen Formkörpers in dessen Längsrichtung mit den Infrarotstrahlen eine Heizlampe, einen Halogenheizer oder einen Ferninfrarotstrahlenheizer (FIR) verwendet.

10. Herstellungsverfahren des keramischen gebrannten Körpers (11, 11') nach Anspruch 8 oder 9, wobei
ein Trocknen eine Trocknungsvorrichtung (100), die einen Trockenraum (130) zum Trocknen des keramischen Formkörpers, eine Druckreduzierungseinheit zum Druckreduzieren eines Inneren des Trockenraums (130) und eine Mikrowellenbestrahlungseinheit (131) zum Bestrahlen des keramischen Formkörpers mit der Mikrowelle im Inneren des Trockenraums (130), aufweist; und
eine Infrarotstrahlenbestrahlungseinheit (132) zum Bestrahlen der beiden Endflächen des keramischen Formkörpers in dessen Längsrichtung mit den Infrarotstrahlen, verwendet.

11. Herstellungsverfahren des keramischen gebrannten Körpers (11, 11') nach Anspruch 10, wobei
die Trocknungsvorrichtung (100) eine Vorrichtung kontinuierlichen Typs ist.

12. Herstellungsverfahren für eine Wabenstruktur (10, 10') mit:
dem Herstellungsverfahren des keramischen gebrannten Körpers (11, 11') gemäß einem der Herstellungsverfahren des keramischen gebrannten Körpers (11, 11') nach Ansprüchen 4 bis 11.

13. Herstellungsverfahren für eine Abgasumwandlungseinrichtung (1000) mit:
dem Herstellungsverfahren der Wabenstruktur (10, 10') gemäß dem Herstellungsverfahren der Wabenstruktur (10, 10') nach Anspruch 12.

14. Trocknungsvorrichtung (100), die einen keramischen Formkörper, der mehreren Durchgangsöffnungen (11a) aufweist, die parallel zueinander in deren Längsrichtungen angeordnet sind, wobei sie durch Trennwände (11b) getrennt sind, wobei die Trocknungsvorrichtung (100) aufweist:
einen Trockenraum (130), der ausgestaltet ist, um den keramischen Formkörper zu trocknen;
eine Druckreduzierungseinheit, die ausgestaltet ist, um ein Inneres des Trockenraums (130) auf eine druckreduzierte Atmosphäre von 1 kPa oder mehr und 50 kPa oder weniger zu reduzieren;
eine Mikrowellenbestrahlungseinheit (131), die ausgestaltet ist, um den keramischen Formkörper im Inneren des Trockenraums (130) mit einer Mikrowelle zu bestrahlen; und
eine Infrarotstrahlenbestrahlungseinheit (132), die ausgestaltet ist, um beide Endflächen des keramischen Formkörpers in dessen Längsrichtung mit Infrarotstrahlen zu bestrahlen.

15. Trocknungsvorrichtung (100) nach Anspruch 14, wobei
die Infrarotstrahlenbestrahlungseinheit (132) eine Heizlampe, ein Halogenheizer oder ein Ferninfrarotstrahlenheizer (FIR) ist.

16. Trocknungsvorrichtung (100) nach Anspruch 14 oder 15, wobei
die Trocknungsvorrichtung (100) eine Vorrichtung kontinuierlichen Typs ist.

## Revendications

1. Procédé de fabrication d'un corps cuit en céramique (11, 11'), comprenant le fait :
de fabriquer un corps moulé en céramique par la formation d'une composition de matière première céramique contenant de l'eau ;
de sécher le corps moulé en céramique en irradiant le corps moulé en céramique par micro-ondes, sous une atmosphère sous pression supérieure ou égale à 1 kPa et inférieure ou égale à 50 kPa ; et
de fabriquer le corps cuit en céramique (11, 11') par la cuisson du corps moulé en céramique.

2. Procédé de fabrication du corps cuit en céramique (11, 11') selon la revendication 1,
dans lequel le séchage utilise un appareil de séchage (100) qui comporte une chambre de séchage (130) pour le séchage du corps moulé en céramique, une unité de mise sous pression pour la mise sous pression d'un espace intérieur de la chambre de séchage (130), et une unité d'irradiation par micro-ondes (131) pour l'irradiation du corps moulé en céramique à l'intérieur de la chambre de séchage (130) par micro-ondes.

3. Procédé de fabrication du corps cuit en céramique (11, 11') selon la revendication 2,
dans lequel l'appareil de séchage (100) est de type continu.

4. Procédé de fabrication du corps cuit en céramique (11, 11') selon l'une quelconque des revendications 1 à 3,
dans lequel le corps moulé en céramique a plusieurs trous traversants (11a) agencés en parallèle dans leurs directions longitudinales tout en étant séparés par des parois de séparation (11b).

5. Procédé de fabrication du corps cuit en céramique (11, 11') selon la revendication 4,
dans lequel la composition de la matière première céramique comporte en outre une zéolithe et un liant inorganique.

6. Procédé de fabrication du corps cuit en céramique (11, 11') selon la revendication 5,
dans lequel la composition de matière première céramique comporte en outre au moins l'un(e) d'une fibre inorganique, d'un matériau en forme de paillette, d'un matériau en forme de tétrapode, et d'un matériau en forme d'aiguille en trois dimensions.

7. Procédé de fabrication du corps cuit en céramique (11, 11') selon la revendication 5 ou 6,
dans lequel la zéolithe est une zéolithe de phosphate.

8. Procédé de fabrication du corps cuit en céramique (11, 11') selon l'une quelconque des revendications 4 à 7,
dans lequel le séchage du corps moulé en céramique est effectué par l'irradiation des deux surfaces d'extrémité du corps moulé en céramique dans sa direction longitudinale par des rayons infrarouges tout en irradiant le corps moulé en céramique par micro-ondes.

9. Procédé de fabrication du corps cuit en céramique (11, 11') selon la revendication 8,
dans lequel l'irradiation des deux surfaces d'extrémité du corps moulé en céramique dans sa direction longitudinale par les rayons infrarouges utilise un dispositif de chauffage à lampe, un dispositif de chauffage à halogène ou un dispositif de chauffage à rayons infrarouges lointains (FIR).

10. Procédé de fabrication du corps cuit en céramique (11, 11') selon la revendication 8 ou 9,
dans lequel un séchage utilise l'appareil de séchage (100) qui comporte une chambre de séchage (130) pour le séchage du corps moulé en céramique, une unité de mise sous pression pour la mise sous pression d'un espace intérieur de la chambre de séchage (130), et une unité d'irradiation par micro-ondes (131) pour irradier le corps moulé en céramique à l'intérieur de la chambre de séchage (130) par micro-ondes ; et
une unité d'irradiation par rayons infrarouges (132) pour irradier les deux surfaces d'extrémité du corps moulé en céramique dans sa direction longitudinale par les rayons infrarouges.

11. Procédé de fabrication du corps cuit en céramique (11, 11') selon la revendication 10,
dans lequel l'appareil de séchage (100) est de type continu.

12. Procédé de fabrication d'une structure en nid d'abeilles (10, 10') comprenant :
le procédé de fabrication du corps cuit en céramique (11, 11') selon l'une quelconque des procédés de fabrication du corps cuit en céramique (11, 11') des revendication 4 à 11.

13. Procédé de fabrication d'un dispositif de conversion de gaz d'échappement (1000) comprenant :
le procédé de fabrication de la structure en nid d'abeilles (10, 10') selon le procédé de fabrication de la structure en nid d'abeilles (10, 10') de la revendication 12.

14. Appareil de séchage (100) qui sèche un corps moulé en céramique ayant plusieurs trous traversants (11a) agencés en parallèle dans leurs directions longitudinales tout en étant séparés par des parois de séparation (11b), l'appareil de séchage (100) comprenant :
une chambre de séchage (130) configurée pour sécher le corps moulé en céramique ;
une unité de mise sous pression configurée pour mettre sous pression un espace intérieur de la chambre de séchage (130) à une atmosphère sous pression supérieure ou égale à 1 kPa et inférieure ou égale à 50 kPa ;
une unité d'irradiation par micro-ondes (131) configurée pour irradier le corps moulé en céramique à l'intérieur de la chambre de séchage (130) par micro-ondes ; et
une unité d'irradiation par rayons infrarouges (132) configurée pour irradier les deux surfaces d'extrémité du corps moulé en céramique dans sa direction longitudinale par des rayons infrarouges.

15. Appareil de séchage (100) selon la revendication 14, dans lequel l'unité d'irradiation par rayons infrarouges (132) est un dispositif de chauffage à lampe, un dispositif de chauffage à halogène ou un dispositif de chauffage à rayons infrarouges lointains (FIR).

16. Appareil de séchage (100) selon la revendication 14 ou 15,
dans lequel l'appareil de séchage (100) est de type continu.
